# EUROPEAN PATENT APPLICATION

(11) **EP 1 607 843 A2**
(43) Date of publication of application: **21.12.2005**
(21) Application number: 05104190.3
(22) Date of filing: 18.05.2005
(51) Int. Cl.: G06F 3/00

(54) **Restricting the display of information with a physical object**

(30) Priority: 24.05.2004 US 852397
(71) Applicant: MICROSOFT CORPORATION, Redmond, Washington 98052-6399 (US)
(72) Inventor: Chen, Christina Summer, Redmond, WA 98052 (US); Kurlander, David Joshua, Redmond, WA 98052 (US); Dehlin, Joel P., Redmond, WA 98052 (US)
(74) Representative: Grünecker, Kinkeldey, Stockmair & Schwanhäusser Anwaltssozietät

(57) **Abstract**

A view restrictor is employed to ensure that private information can only be viewed on an interactive display by a privileged user but not by non-privileged users. By detecting the location and orientation of the view restrictor on the display surface, a private portion of the display surface can be determined. The private portion is not visible to non-privileged users. The private information is then displayed to a privileged user at this private portion, and the view restrictor blocks non-privileged user(s) from viewing the private information. The interactive display detects removal of the view restrictor from the display surface, and interrupts display of the private information. In another embodiment, the private information is obfuscated so that it can be viewed only by a privileged viewer through a view revealer that includes a color filter. The private information may be either a graphic image or text.

## Description

### Field of the Invention

This invention generally pertains to a method and system that limits the visible perception of private data on a display surface only to a privileged viewer, and more specifically, pertains to a method and system to ensure that only a privileged viewer is able to see private data displayed on an interactive display by preventing non-privileged users from visually seeing or perceiving the private data.

### Background of the Invention

Several interactive displays are known in the prior art. For example, a user interface platform was developed in the MIT Media Lab, as reported by Brygg Ullmer and Hiroshi Ishii in "The metaDESK: Models and Prototypes for Tangible User Interfaces," *Proceedings of UIST* 10/1997:14-17. This article describes how the metaDESK includes a near-horizontal graphical surface that is used to display two-dimensional (2D) geographical information. A computer vision system inside the desk unit (i.e., below the graphical surface) includes infrared (IR) lamps, an IR camera, a video camera, a video projector, and mirrors. The mirrors reflect the graphical image projected by the projector onto the underside of the graphical display surface to provide images that are visible to a user from above the graphical display surface. The article further teaches that the IR camera can detect a distinctive pattern provided on the undersurface of passive objects called "phicons" that are placed on the graphical surface. Thus, the IR camera detects an IR pattern (which is transparent to visible light) applied to the bottom of a "Great Dome phicon" and responds by displaying a map of the MIT campus on the graphical surface, with the actual location of the Great Dome in the map positioned where the Great Dome phicon is located. Moving the Great Dome phicon over the display surface manipulates the displayed map by rotating or translating the map in correspondence to the movement of the phicon by a user. Clearly, the IR vision-sensing system used in this prior art interactive display is able to detect objects like the phicon, based upon the reflected light from the IR reflective material. There is no discussion of details involved in detecting an object without the use of the IR reflective material, or in determining a relative position of an object above the display surface.

A similar technique for sensing objects on a display surface is disclosed in several papers published by Jun Rekimoto of Sony Computer Science Laboratory, Inc., in collaboration with others. These papers briefly describe a "HoloWall" and a "HoloTable," both of which use IR light to detect objects that are proximate to or in contact with a display panel on which a rear-projected image is visible. The rear-projection panel, which is vertical in the HoloWall and horizontal in the HoloTable, is semi-opaque and diffusive, so that objects reflecting IR light back through the panel become more clearly visible to an IR camera as they approach and then contact the panel. The system can thus detect a user's fingers or hand, or other objects. Again, these papers are generally silent regarding the process used for detecting an object based upon the IR light reflected from the object and also fail to discuss determining the relative separation between an object and the display surface.

Any display or monitor can display information to one or more users who are in a position to view the information. If the display surface is viewable from different directions, for example, a display surface that is generally horizontal, with users who are on different sides of the display surface, it will be apparent that the information can be displayed in an orientation that enables a user on one side of the display surface to more readily view the information; however, other users can still see the information, even if not in its normal preferred orientation. Thus, text properly oriented when displayed to a user on one side of the display surface can readily be seen and read by users at other sides of the display surface, who can read the text upside down or from either side. Alternatively, the information can be displayed in the proper orientation to be viewed by users on each side of the display surface. For collaborative efforts of multiple users, being able to view and perceive the displayed information can be advantageous. However, even in collaborative efforts, or in specific applications, it may be desirable to enable only some users to visually perceive information presented on a display surface.

For example, in many games, such as "Scrabble™," "Trivial Pursuit™," or "Clue™," certain information should be communicated only to a subset of the players while the majority of the information pertaining to the game should be visible to all users or players. Clearly what is needed is to be able to restrict the view of some information from certain users and, conversely, to reveal some information to certain users. The prior art does not disclose any device or procedure to readily accomplish this objective.

If the game is being played using an interactive display device, it would be desirable to determine where the private information is to be displayed, and prompt a user to take appropriate steps to block that portion of the display surface from being viewed by any users who should not at that time be able to view the private information. By using an interactive display table, it should further be desirable to detect if an object is properly positioned or oriented to shield the private information from the view of any users who are not then supposed to be able to view it, while not preventing a privileged user who should be able to view the private information from visually perceiving the private information.

It would also be desirable to determine where the private information should be displayed so that only the privileged user is able to see it. For example, an interactive display system should be able to detect where to display the information relative to a location of an object that blocks non-privileged users from viewing it, based also on a location of the privileged user, and/or the non-privileged users. Again, the prior art relevant to interactive display tables does not teach or suggest this functionality.

### Summary of the Invention

One aspect of the present invention is directed to a method that enables a view restrictor to be positioned at a first location on a display surface. The private information is then displayed at a second location on the display surface, so that the view restrictor substantially blocks any non-privileged viewer from viewing the private information but enables a privileged viewer to view the private information. In this case, the first location and the second location can be predefined, or alternatively, the first location (i.e., of the view restrictor) can be detected to determine the second location where the private information is displayed.

Another aspect of the present invention is directed to a method for restricting a view of private information displayed on a display surface to a privileged viewer, wherein at least a portion of the display surface can be viewed by a non-privileged viewer. The method includes the step of detecting a view restrictor that is placed on the display surface, so as to restrict a view of a private portion of the display surface to a privileged viewer. The view restrictor is associated with the private information, that is preferably not to be seen by others around the display surface. The private portion on the display surface at which to display the private information is then determined and the private information is displayed at the private portion. For example, if an electronic game is being played and certain information is to be visible only to one of the players, the view restrictor can ensure that the other players are unable to see the displayed private information.

The step of detecting the view restrictor includes detecting a physical property associated with the view restrictor from one of two different dispositions. One of these dispositions is a side of the interactive display surface that is opposite an object side of the display surface, the object side being where the view restrictor is placed. Alternatively, the disposition can be within the interactive display surface, for example, where a capacitive or other type of touch-sensitive display surface is being used, or above the interactive display surface, e.g., using a camera to sense the physical characteristic.

The method also includes the steps of determining an orientation of the view restrictor and determining the private portion relative to at least one of a location and the orientation of the view restrictor on the display surface. Determining the orientation of the view restrictor comprises determining an orientation characteristic of the view restrictor. Such characteristics may include the shape of the view restrictor, an orientation of an identifier on the view restrictor, a variation in a color of the view restrictor, a variation in light intensity reflected from the view restrictor, a magnetic polarization of the view restrictor, or a pressure vibration produced by the view restrictor on the display surface.

Also included in the method is the step of identifying the privileged viewer with whom the view restrictor is associated and who is to view the private information. A location of the privileged viewer is determined relative to the view restrictor and the method then determines whether the view restrictor is oriented such that the private portion is viewable from the privileged viewer location. Determining the location of the privileged viewer can be done by determining a location of a privileged viewer token on the display surface or by determining a predefined privileged viewer location as a function of a state of an application displaying the private information on the display surface, or by determining the user interaction with the interactive display surface, or by localizing the position of a user's voice in space, or by using any other sensing technology, such as computer vision, to determine the location of the privileged viewer.

A location of the non-privileged viewer relative to the view restrictor is also optionally determined and a disposition of the private portion of the display surface is adjusted such that the view restrictor prevents the private information being visible from the location of the non-privileged viewer.

A user input graphical object may be included in the private information. The method can then include the step of responding to a user input as a result of the privileged viewer interacting with the user input graphical object.

Still further steps of the method include detecting removal of the view restrictor from the display surface and, in response, interrupting display of the private information on the display surface.

A further aspect of the present invention is directed to a memory medium on which are stored machine instructions for carrying out steps generally consistent with the steps of the method discussed above.

Yet another aspect of the present invention is directed to a system for restricting a view of private information displayed to a privileged viewer, to prevent the private information being viewed by a non-privileged viewer. The system includes a display surface on which the private information is displayed, the display surface having an interactive side from which the private information is viewed adjacent to which objects can be placed, at least a portion of the display surface being visible by a non-privileged viewer. Included in the system is a view restrictor that is sized and shaped to be placed on the display surface to restrict a view of private information being displayed on the display surface, by a non-privileged viewer. A light source is disposed on an opposite side of the display surface from the interactive side and emits an infrared light that is transmitted through the display surface to the interactive side of the display surface. A light sensor is disposed on the opposite side of the display surface and senses infrared light reflected back from an object through the display surface. A processor is in communication with the light sensor and with a memory that stores data and machine instructions causing the processor to carry out a plurality of functions that are also generally consistent with the steps of the method described above.

Another aspect is directed to a method for revealing private information on a display surface, wherein at least a portion of the display surface can be viewed by a non-privileged viewer. The method includes the step of obfuscating private information displayed on the display surface and the step of enabling the private information to be viewed when a view revealer is placed in a line of sight between the private information and a viewer. The step of obfuscating private information also includes a step of applying a color marking to the private information, such as red and green anaglyph coloring, to prevent recognition of the private information when the private information is viewed without the view revealer. The step of enabling the private information to be viewed includes the use of a view revealer comprising a light filter that can filter out the color marking to enable recognition of the private information.

Another aspect of the present invention is directed to a view restrictor for restricting view of private information on a display surface, wherein at least a portion of the display surface can be viewed by a non-privileged viewer. The view restrictor includes a support surface for supporting the view restrictor on a display surface. The view restrictor also includes a view restricting component supported by the support surface, the view restricting component being shaped and sized to restrict a view of a portion of the display surface. The view restrictor also comprises an identifier that identifies the view restrictor to a display system for displaying the private information at a private portion on the display surface relative to the view restricting component. The identifier of the view restrictor comprises at least one of a predefined shape, a detectable code, a color, and a signal.

Another aspect of the present invention is directed to a view revealer for enabling view of private information on a display surface by a privileged viewer, wherein at least a portion of the display surface can be viewed by a non-privileged viewer. The view revealer includes a support surface for supporting the view revealer on a display surface. The view revealing component causes the private information to be viewable when the view revealing component is placed at a private portion relative to the display surface. The view revealer also includes an identifier that identifies the view revealer to a display system for displaying the private information at the private portion on the display surface relative to the view revealing component. The view revealer also includes a color filter for filtering out a color marker applied to the private information.

### Brief Description of the Drawing Figures

The foregoing aspects and many of the attendant advantages of this invention will become more readily appreciated as the same becomes better understood by reference to the following detailed description, when taken in conjunction with the accompanying drawings, wherein:
FIGURE 1 is a functional block diagram of a generally conventional computing device or personal computer (PC) that is suitable for image processing for the interactive table as used in practicing the present invention;
FIGURE 2 is a cross-sectional view of the interactive table illustrating internal components;
FIGURE 3 is an isometric view of the interactive table;
FIGURE 4 is an illustration of the interactive table showing a physical component restricting the view of virtual components;
FIGURE 5 is an illustration of the interactive table showing a physical component revealing the view of virtual components;
FIGURE 6 is a flow chart of a process for handling predefined view restrictor locations;
FIGURE 7 is a flow chart of a process for handling movable view restrictors;
FIGURE 8 is a flow chart of a process for handling a movable view revealer; and
FIGURE 9 is a flow chart of a process for handling removal of private data from the display surface in response to the view restrictor being removed.

### Description of the Preferred Embodiment

### Exemplary Computing System for Implementing Present Invention

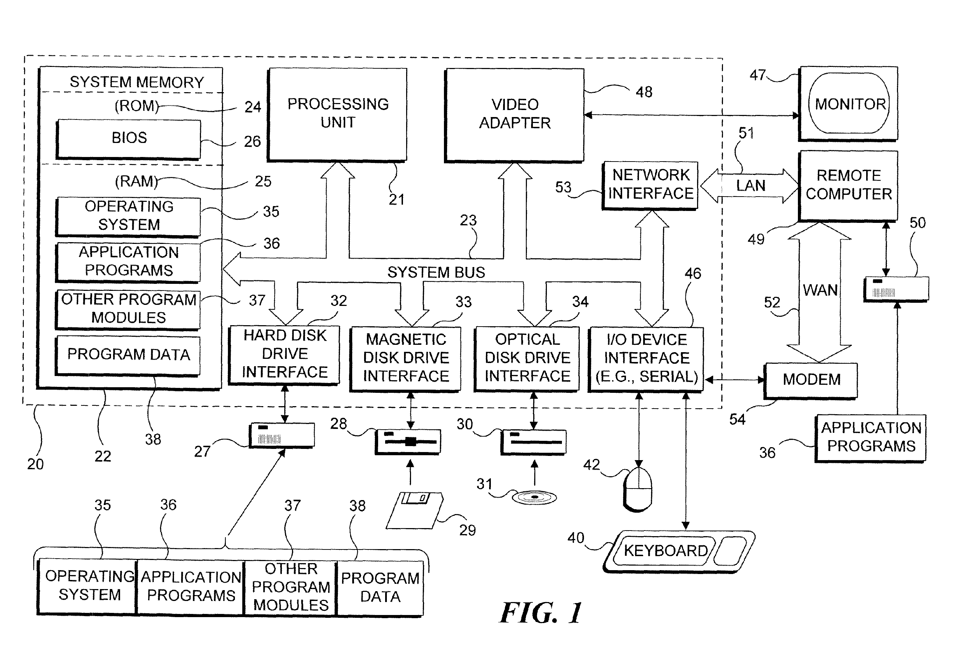

With reference to FIGURE 1, an exemplary system suitable for implementing various portions of the present invention is shown. The system includes a general purpose computing device in the form of a conventional PC 20, provided with a processing unit 21, a system memory 22, and a system bus 23. The system bus couples various system components including the system memory to processing unit 21 and may be any of several types of bus structures, including a memory bus or memory controller, a peripheral bus, and a local bus using any of a variety of bus architectures. The system memory includes read only memory (ROM) 24 and random access memory (RAM) 25. A basic input/output system 26 (BIOS), containing the basic routines that help to transfer information between elements within the PC 20, such as during start up, is stored in ROM 24. PC 20 further includes a hard disk drive 27 for reading from and writing to a hard disk (not shown), a magnetic disk drive 28 for reading from or writing to a removable magnetic disk 29, and an optical disk drive 30 for reading from or writing to a removable optical disk 31, such as a compact disk-read only memory (CD-ROM) or other optical media. Hard disk drive 27, magnetic disk drive 28, and optical disk drive 30 are connected to system bus 23 by a hard disk drive interface 32, a magnetic disk drive interface 33, and an optical disk drive interface 34, respectively. The drives and their associated computer readable media provide nonvolatile storage of computer readable machine instructions, data structures, program modules, and other data for PC 20. Although the exemplary environment described herein employs a hard disk, removable magnetic disk 29, and removable optical disk 31, it will be appreciated by those skilled in the art that other types of computer readable media, which can store data and machine instructions that are accessible by a computer, such as magnetic cassettes, flash memory cards, digital video disks (DVDs), Bernoulli cartridges, RAMs, ROMs, and the like, may also be used in the exemplary operating environment.

A number of program modules may be stored on the hard disk, magnetic disk 29, optical disk 31, ROM 24, or RAM 25, including an operating system 35, one or more application programs 36, other program modules 37, and program data 38. A user may enter commands and information in PC 20 and provide control input through input devices, such as a keyboard 40 and a pointing device 42. Pointing device 42 may include a mouse, stylus, wireless remote control, or other pointer, but in connection with the present invention, such conventional pointing devices may be omitted, since the user can employ the interactive display for input and control. As used hereinafter, the term "mouse" is intended to encompass virtually any pointing device that is useful for controlling the position of a cursor on the screen. Other input devices (not shown) may include a microphone, joystick, haptic joystick, yoke, foot pedals, game pad, satellite dish, scanner, or the like. These and other input/output (I/O) devices are often connected to processing unit 21 through an I/O interface 46 that is coupled to the system bus 23. The term I/O interface is intended to encompass each interface specifically used for a serial port, a parallel port, a game port, a keyboard port, and/or a universal serial bus (USB). System bus 23 is also connected to a camera interface 59, which is coupled to an interactive display 60 to receive signals from a digital video camera that is included therein, as discussed below. The digital video camera may be instead coupled to an appropriate serial I/O port, such as to a USB version 2.0 port. Optionally, a monitor 47 can be connected to system bus 23 via an appropriate interface, such as a video adapter 48; however, the interactive display table of the present invention can provide a much richer display and interact with the user for input of information and control of software applications and is therefore preferably coupled to the video adaptor. It will be appreciated that PCs are often coupled to other peripheral output devices (not shown), such as speakers (through a sound card or other audio interface - not shown) and printers.

The present invention may be practiced using a single computing device, although PC 20 can also operate in a networked environment using logical connections to one or more remote computers, such as a remote computer 49. Remote computer 49 may be another PC, a server (which is typically generally configured much like PC 20), a router, a network PC, a peer device, or a satellite or other common network node, and typically includes many or all of the elements described above in connection with PC 20, although only an external memory storage device 50 has been illustrated in FIGURE 1. The logical connections depicted in FIGURE 1 include a local area network (LAN) 51 and a wide area network (WAN) 52. Such networking environments are common in offices, enterprise wide computer networks, intranets, and the Internet.

When used in a LAN networking environment, PC 20 is connected to LAN 51 through a network interface or adapter 53. When used in a WAN networking environment, PC 20 typically includes a modem 54, or other means such as a cable modem, Digital Subscriber Line (DSL) interface, or an Integrated Service Digital Network (ISDN) interface for establishing communications over WAN 52, such as the Internet. Modem 54, which may be internal or external, is connected to the system bus 23 or coupled to the bus via I/O device interface 46, i.e., through a serial port. In a networked environment, program modules, or portions thereof, used by PC 20 may be stored in the remote memory storage device. It will be appreciated that the network connections shown are exemplary and other means of establishing a communications link between the computers may be used, such as wireless communication and wide band network links.

### Exemplary Interactive Surface

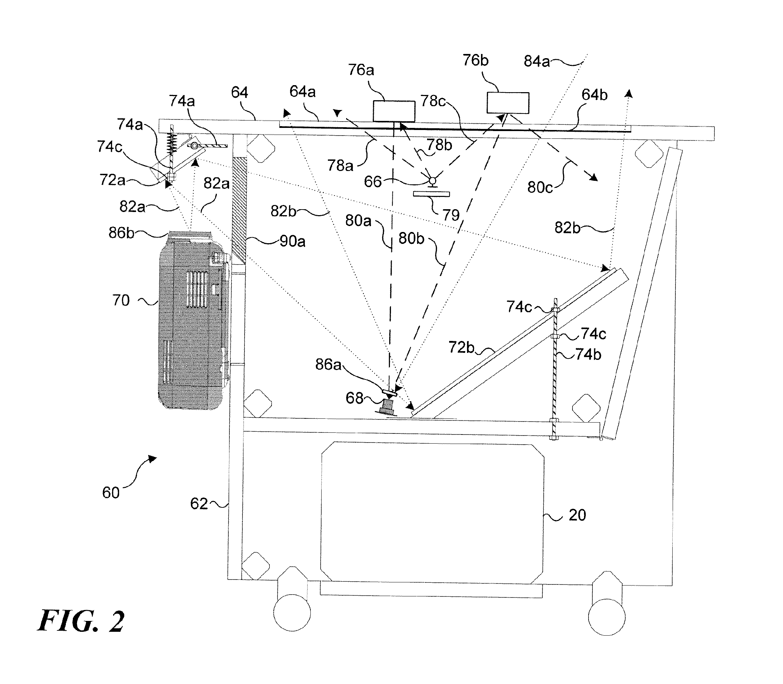

In FIGURE 2, an exemplary interactive display table 60 is shown that includes PC 20 within a frame 62 and which serves as both an optical input and video display device for the computer. In this cut-away Figure of the interactive display table, rays of light used for displaying text and graphic images are generally illustrated using dotted lines, while rays of infrared (IR) light used for sensing objects on or just above a display surface 64a of the interactive display table are illustrated using dash lines. Display surface 64a is set within an upper surface 64 of the interactive display table. The perimeter of the table surface is useful for supporting a user's arms or other objects, including objects that may be used to interact with the graphic images or virtual environment being displayed on display surface 64a.

IR light sources 66 preferably comprise a plurality of IR light emitting diodes (LEDs) and are mounted on the interior side of frame 62. The IR light that is produced by IR light sources 66 is directed upwardly toward the underside of display surface 64a, as indicated by dash lines 78a, 78b, and 78c. The IR light from IR light sources 66 is reflected from any objects that are atop or proximate to the display surface after passing through a translucent layer 64b of the table, comprising a sheet of vellum or other suitable translucent material with light diffusing properties. Although only one IR source 66 is shown, it will be appreciated that a plurality of such IR sources may be mounted at spaced-apart locations around the interior sides of frame 62 to prove an even illumination of display surface 64a. The infrared light produced by the IR sources may:
- exit through the table surface without illuminating any objects, as indicated by dash line 78a;
- illuminate objects on the table surface, as indicated by dash line 78b; or
- illuminate objects a short distance above the table surface but not touching the table surface, as indicated by dash line 78c.

Objects above display surface 64a include a "touch" object 76a that rests atop the display surface and a "hover" object 76b that is close to but not in actual contact with the display surface. As a result of using translucent layer 64b under the display surface to diffuse the IR light passing through the display surface, as an object approaches the top of display surface 64a, the amount of IR light that is reflected by the object increases to a maximum level that is achieved when the object is actually in contact with the display surface.

A digital video camera 68 is mounted to frame 62 below display surface 64a in a position appropriate to receive IR light that is reflected from any touch object or hover object disposed above display surface 64a. Digital video camera 68 is equipped with an IR pass filter 86a that transmits only IR light and blocks ambient visible light traveling through display surface 64a along dotted line 84a. A baffle 79 is disposed between IR source 66 and the digital video camera to prevent IR light that is directly emitted from the IR source from entering the digital video camera, since it is preferable that this digital video camera should produce an output signal that is only responsive to the IR light reflected from objects that are a short distance above or in contact with display surface 64a and corresponds to an image of IR light reflected from objects on or above the display surface. It will be apparent that digital video camera 68 will also respond to any IR light included in the ambient light that passes through display surface 64a from above and into the interior of the interactive display (e.g., ambient IR light that also travels along the path indicated by dotted line 84a).

IR light reflected from objects on or above the table surface may be:
- reflected back through translucent layer 64b, through IR pass filter 86a and into the lens of digital video camera 68, as indicated by dash lines 80a and 80b; or
- reflected or absorbed by other interior surfaces within the interactive display without entering the lens of digital video camera 68, as indicated by dash line 80c.

Translucent layer 64b diffuses both incident and reflected IR light. Thus, as explained above, "hover" objects that are closer to display surface 64a will reflect more IR light back to digital video camera 68 than objects of the same reflectivity that are farther away from the display surface. Digital video camera 68 senses the IR light reflected from "touch" and "hover" objects within its imaging field and produces a digital signal corresponding to images of the reflected IR light that is input to PC 20 for processing to determine a location of each such object, and optionally, the size, orientation, and shape of the object. It should be noted that a portion of an object (such as a user's forearm) may be above the table while another portion (such as the user's finger) is in contact with the display surface. In addition, an object may include an IR light reflective pattern or coded identifier (e.g., a bar code) on its bottom surface that is specific to that object or to a class of related objects of which that object is a member. Accordingly, the imaging signal from digital video camera 68 can also be used for detecting each such specific object, as well as determining its orientation, based on the IR light reflected from its reflective pattern, in accord with the present invention. The logical steps implemented to carry out this function are explained below.

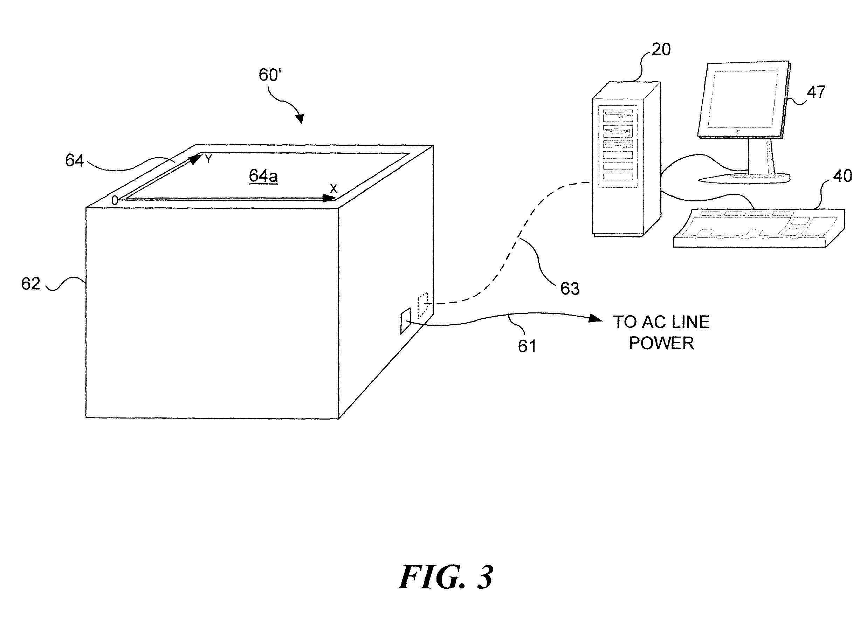

PC 20 may be integral to interactive display table 60 as shown in FIGURE 2, or alternatively, may instead be external to the interactive display table, as shown in the embodiment of FIGURE 3. In FIGURE 3, an interactive display table 60' is connected through a data cable 63 to an external PC 20 (which includes optional monitor 47, as mentioned above). As also shown in this Figure, a set of orthogonal X and Y axes are associated with display surface 64a, as well as an origin indicated by "0." While not specifically shown, it will be appreciated that a plurality of coordinate locations along each orthogonal axis can be employed to indicate any location on display surface 64a.

If the interactive display table is connected to an external PC 20 (as in FIGURE 3) or to some other type of external computing device, such as a set top box, video game, laptop computer, or media computer (none shown), then the interactive display table comprises an input/output device. Power for the interactive display table is provided through a power lead 61, which is coupled to a conventional alternating current (AC) line source (not shown). Data cable 63, which connects to interactive display table 60', can be coupled to a USB 2.0 port, an Institute of Electrical and Electronics Engineers (IEEE) 1394 (or Firewire) port, or an Ethernet port on PC 20. It is also contemplated that as the speed of wireless connections continues to improve, the interactive display table might also be connected to a computing device such as PC 20 via such a high speed wireless connection, or via some other appropriate wired or wireless data communication link. Whether included internally as an integral part of the interactive display, or externally, PC 20 executes algorithms for processing the digital images from digital video camera 68 and executes software applications that are designed to use the more intuitive user interface functionality of interactive display table 60 to good advantage, as well as executing other software applications that are not specifically designed to make use of such functionality, but can still make good use of the input and output capability of the interactive display table. As yet a further alternative, the interactive display can be coupled to an external computing device, but include an internal computing device for doing image processing and other tasks that would then not be done by the external PC.

An important and powerful feature of the interactive display table (i.e., of either embodiments discussed above) is its ability to display graphic images or a virtual environment for games or other software applications and to enable an interaction between the graphic image or virtual environment visible on display surface 64a and objects that are resting atop the display surface, such as an object 76a, or are hovering just above it, such as an object 76b. It is the ability of the interactive display table to visually detect such objects, as well as the user's finger or other object being moved by the user that greatly facilities this rich interaction.

Again referring to FIGURE 2, interactive display table 60 includes a video projector 70 that is used to display graphic images, a virtual environment, or text information on display surface 64a. The video projector is preferably of a liquid crystal display (LCD) or digital light processor (DLP) type, or a liquid crystal on silicon (LCoS) display type, with a resolution of at least 640x480 pixels. An IR cut filter 86b is mounted in front of the projector lens of video projector 70 to prevent IR light emitted by the video projector from entering the interior of the interactive display table where the IR light might interfere with the IR light reflected from object(s) on or above display surface 64a. A first mirror assembly 72a directs projected light traveling from the projector lens along dotted path 82a through a transparent opening 90a in frame 62, so that the projected light is incident on a second mirror assembly 72b. Second mirror assembly 72b reflects the projected light along a path 82b onto translucent layer 64b, which is at the focal point of the projector lens, so that the projected image is visible and in focus on display surface 64a for viewing.

Alignment devices 74a and 74b are provided and include threaded rods and rotatable adjustment nuts 74c for adjusting the angles of the first and second mirror assemblies to ensure that the image projected onto the display surface is aligned with the display surface. In addition to directing the projected image in a desired direction, the use of these two mirror assemblies provides a longer path between projector 70 and translucent layer 64b, and more importantly, helps in achieving a desired size and shape of the interactive display table, so that the interactive display table is not too large and is sized and shaped so as to enable the user to sit comfortably next to it.

### Restricting a View of Vutual Private Data

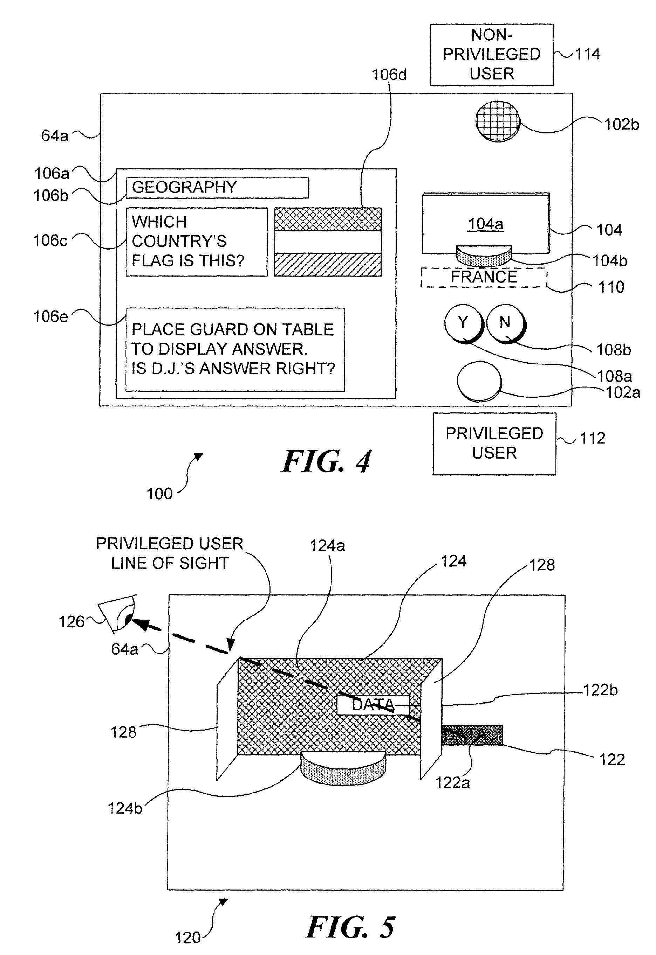

In FIGURE 4, an illustration 100 shows, in an exemplary manner, how the present invention is employed to restrict a view of virtual private data, so that only a specific user is able to visually perceive the virtual private data. Both physical and virtual components occupy display surface 64a. Virtual components 106a-106e present image and textual information to users positioned around the display surface. In this example of an electronic game that is played with the interactive display table, the software being executed during the game causes an exemplary virtual information card 106a to be displayed. This card is in a question category 106b and includes a question 106c, an illustration 106d upon which the question is based, and an instruction 106e to the user directing the user to indicate whether another user's response to the question is correct.

The physical components for this example include user tokens 102 that are marked with IR reflective codes on their bottom surface (so that the reflective codes are not visible in this view), to enable the interactive table to determine the locations of the tokens assigned to each user or player in the game, and based upon the disposition of each token on display surface 64a, to physically locate the player associated with the token at a position adjacent to where the token is disposed. In the illustrated example, a token 102a is assigned to a privileged user 112― i.e., the user who will be asking question 106c, which is posed on virtual information card 106a. In contrast, a token 102b is assigned to a non-privileged user 114, who, in the illustrated example, is the person answering the question. Since tokens 102a and 102b are disposed on opposite sides of the display surface, it will be apparent that the privileged user and the non-privileged user are also disposed at opposite sides of the interactive display table.

A view restrictor 104 is shown in a position on the display surface between token102a and 102b, and thus, also between the privileged user and non-privileged user. View restrictor 104 comprises a view restricting panel 104a and a support 104b. The underside of support 104b is marked with an IR reflective identification (ID) code that is detectable by the IR video camera within the interactive table, enabling PC 20 to determine the physical location and orientation of the view restrictor. The ID code may alternatively be a specific color, and if used with a different type of display surface that includes an appropriate sensor, the ID code may be a magnetic code, an RF signal source, capacitive coupled code, a pressure resonance, or other identifiable signal or characteristic that is associated with view restrictive panel 104.

When the interactive table senses the presence of the view restrictor on display surface 64a, the virtual private data 110 are displayed on the display surface at an appropriate position relative to the location and orientation of view restrictor 104. The location of the virtual private data is chosen relative to the location and orientation of the view restrictor in regard to the privileged user's token such that the virtual private data are viewable only from the position of privileged user 112, but not from the position of non-privileged user 114. Since virtual information card 106a cannot be physically picked up and turned over by the privileged user (like a physical trivia card, which would reveal information only to the privileged user), the present invention employs view restrictive panel 104 to block non-privileged user 114 from seeing the answer to question 106c; however, privileged user 112 is able to see the answer, and thus, can determine if non-privileged user 114 answers question 106c correctly.

When the interactive table senses the presence of a view restrictor, other virtual objects, such as graphic objects 108a and 108b, which solicit input from the privileged user, are displayed. In this example, the privileged user waits for the non-privileged user to answer question 106c, and then compares the answer given by non-privileged user 114 with the correct answer shown as virtual private data 110. As shown in FIGURE 4, question 106c is oriented to be more easily read by the privileged user, but would normally be oriented to be more easily ready by the non-privileged user, who will need to answer the question. Alternatively, question 106c might initially be displayed for a predefined time interval - e.g., 20 seconds, in the orientation that enables the non-privileged user to read the question more easily, and then change to enable the privileged user to more readily read the question. If the answer given is correct, i.e., matches the virtual private data, privileged user 112 selects graphic object 108a, which indicates a "yes" input, but if the answer given does not match the virtual private data, the privileged user selects graphic object 108b, to indicate "no," that the incorrect answer was given by the non-privileged user. Of course, other types of user interaction prompts and options for input by either the privileged or non-privileged user (or both) can be provided in connection with the display of the virtual private data on the display surface, depending upon the software application with which view restrictor 104 is being used.

### Revealing a View of Virtual Private Data

In FIGURE 5, another embodiment 120 is used to reveal virtual private data only to eyes 126 of a privileged user, although the virtual private data are displayed on display surface 64a for other users, who are non-privileged, to view. Again, in this second embodiment, both physical and virtual components are illustrated on display surface 64a. In this embodiment, virtual private data 122a are projected onto the display surface within a region 122, which is configured so that the virtual private data are not visually perceivable to non-privileged users. To prevent the non-privileged user(s) from visually perceiving the virtual private data that is displayed within region 122, a color is applied to region 122, and the color is selected to deliberately obfuscate the virtual private data.

A view revealer 124 is provided to enable the privileged user to visually perceive the virtual private data within region 122. The view revealer comprises a view revealing panel 124a and a support (or base) 124b. Associated with the support is an ID code that is detectable by the interactive display table and used to determine the physical location and orientation of view revealer 124. View revealing panel 124a is a filter that filters the obfuscating color obscuring virtual private data 122b in region 122, to enable the virtual private data to be visually perceived by the privileged user who is positioned so that the line of sight of the privileged user is through view revealing panel 124a and toward region 122. Any non-privileged user would not be in a position to view region 122 through view revealing panel 124a and would therefore not be able to perceive virtual private data 122a. Since the location and orientation of support 124b is determined by PC 20 in response to the ID code, and the disposition of the user is determined either based upon an initial setup when starting a software application that uses the view revealer or as a result of a user token being detected on display surface 64a, the system can determine where on the display surface to display region 122 with virtual private data 122a, so that only the privileged user can see the virtual private data through view revealing panel 124a. The location of the privileged user can alternatively be detected by using audio detection schemes to localize the user's voice or by using video detection techniques.

Optionally, view revealing panel 124a can be configured so that it has sides 128 that restrict the view of region 122 through the view revealing panel by non-privileged users. The use of sides 128 limits the angle from which region 122 can be seen through the view revealing panel.

### Process for Predefined View Restrictor Locations

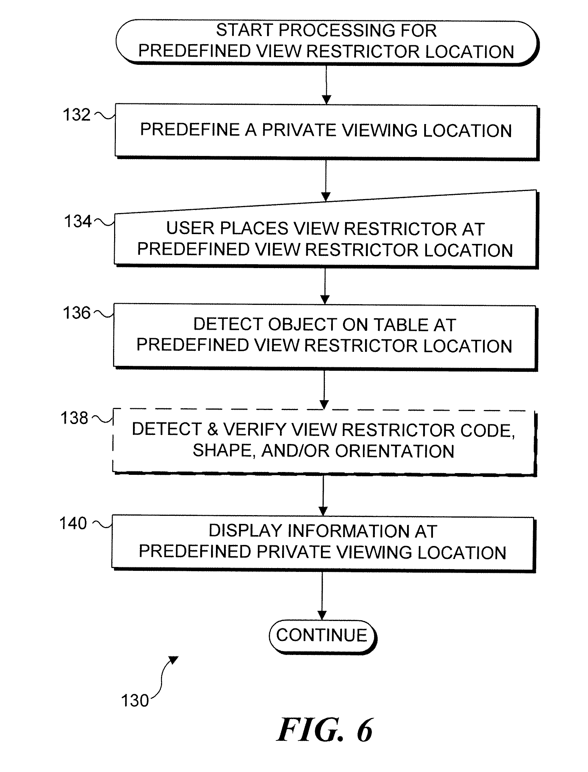

FIGURE 6 illustrates, in an exemplary manner, the handling of a predefined view restrictor location. In this procedure, it is assumed that the view restrictor will be positioned by the user to ensure that a predefined viewing location can only be seen by a privileged user. This logic assumes that the software application will always display the private information at the same location on the display surface and that the user will thus position the view restrictor as directed to protect that location.

As indicated in a flow chart 130 of FIGURE 6, in a step 132, an Image Processing Module (IPM) predefines a private viewing location where virtual private data will be displayed. Preferably, the private viewing location is a defined region on the display surface. In a step 134, a user places a view restrictor at the predefined view restrictor location, which might be marked with a graphic image, or a line, or text displayed on the display surface. The application thus defines the location where the view restrictor should be positioned on the display surface. When an object is detected at the display surface at the predefined location, the logic causes the IPM to initiate other actions or functions.

In a step 136, the IPM detects an object on the display surface at the predefined view restrictor location. While it could be assumed that the object is the view restrictor and that it has been placed at the proper location and in a desired orientation, an optional step 138 actually provides for confirming that the object is indeed the view restrictor, based upon the ID code associated with view restrictor being detected at the predefined location. In addition, optional step 138 causes the IPM to determine the shape, and/or orientation of the object detected in step 136. This step thus ensures that the view restrictor is positioned an necessary to protect the private information that will be displayed at the predefined private viewing location from being visually perceived by a non-privileged user. In a step 140, the IPM displays the private information at the predefined private viewing location.

### Process for Movable View Restrictors

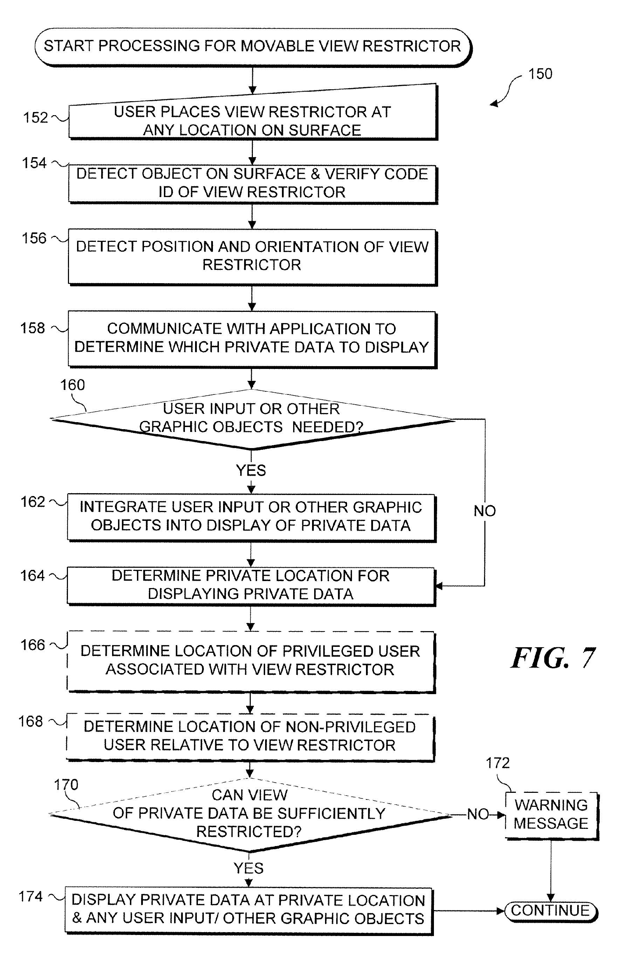

FIGURE 7 includes a flow chart 150 that illustrates, in an exemplary manner, the logic employed for responding to a movable view restrictor. In a step 152, a user places the view restrictor at any location on the display surface. As previously discussed, the support of the view restrictor includes an ID code identifiable by the interactive table that enables PC 20 to determine the physical location and orientation of the view restrictor. The code is preferably an IR reflective marking or a color marking or a distinctive shape or a visual pattern, although for other types of display surfaces, an RF signal or capacitive coupled signal (or other type of electrical characteristic), or a pressure resonance signal might alternatively be used as an ID code to identify the view restrictor.

In a step 154, the IPM detects an object on the display surface and verifies that the object is the view restrictor, based upon the ID code of the object. In a step 156, the IPM detects the position and orientation of the view restrictor. The orientation of the view restrictor can be determined based on the shape of the support, or based upon characteristics of the ID code, or other detectable characteristics of the view restrictor.

In a step 158, the IPM communicates with the software application being executed and determines the private data that are to be displayed at the current time, as a function of the state of the software application. The IPM tests for the need for user input or the display of graphic objects to facilitate interaction with the user, in a decision step 160. If user input or other objects are required, the process continues at a step 162 wherein the IPM integrates the user input and any other graphic objects into the display of the private data. Otherwise, the process continues at a step 164.

Step 164 indicates that the IPM determines the private location where the private information should be displayed. The private location is preferably determined relative to the view restrictor orientation, the privileged user location, the non-privileged user location, and consideration of possible overlap with other displayed data images.

Steps 166, 168, and 170 are optionally executed to facilitate the issuance of a warning message regarding private data being displayed that might not be adequately protected from viewing by non-privileged user(s). Thus, in a step 166, the IPM determines the location of the privileged user associated with the view restrictor (e.g., in response to using a user token or based on application state, or based upon an initial setup condition). Next, a step 168 provides for determining the location of each non-privileged user, relative to the location and orientation of the view restrictor. These last steps are readily employed if user tokens have been detected to determine each user's location around the interactive display or if other techniques have been used to identify the location of the user, such a video or audio processing, or based upon the user's interaction with the interactive display surface. Decision step 170 determines if the view of private data can be sufficiently restricted so as to prevent the private data from being viewed by non-privileged user(s).

If the view of the private data can not be sufficiently restricted from being seen by the non-privileged user(s), the process optionally continues with a step 172, in which the IPM displays a warning message that the private data cannot be securely displayed. However, if the view of the private data can be sufficiently restricted to prevent the non-privileged users private data (or if optional steps 166, 168, and 170 are not executed), then the process continues at a step 174 in which the IPM displays the private data at the private location protected by the view restrictor.

### Process for Movable View Revealer

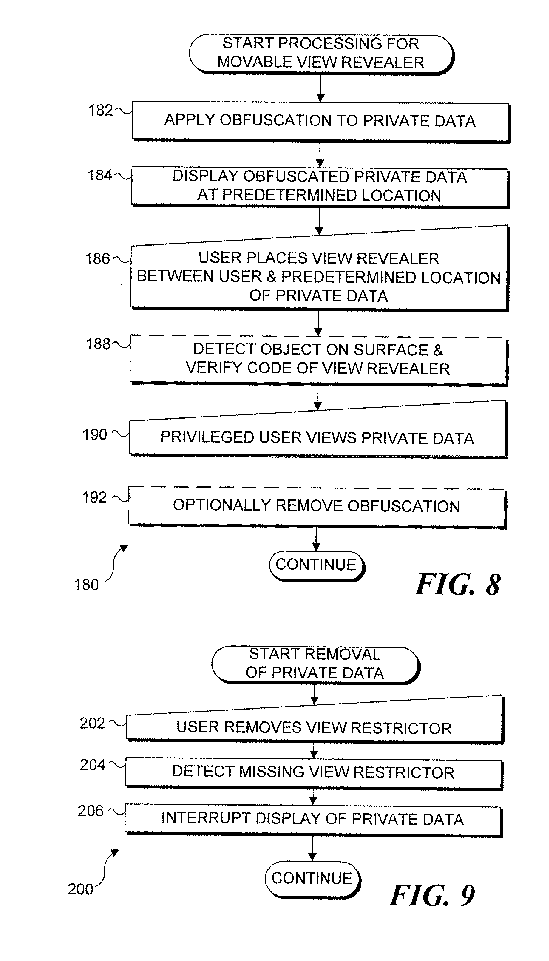

FIGURE 8 illustrates the handling of a movable view revealer in a flow chart 180. After starting the process, a step 182 indicates that the IPM applies a visual obfuscation to the private data. For example, the private data are displayed in a region using red and green anaglyph coloring to obscure the private data to unassisted eyes. In a step 184, the IPM displays the obfuscated private data at a predetermined location. The location can be relative to the privileged user location, relative to non-privileged user locations, selected to avoid overlap with other displayed data, and/or determined as a function of the application state.

In a step 186, a user places a view revealer between the privileged user and the predetermined location of private data. As a further alternative, the position and orientation of the view revealer on the display surface, as well as the relative location of the privileged and/or non-privileged users can be detected to determine where to display the obfuscated private data.

Optionally, a step 188 is executed to an object placed on the display surface, to verify that the object is the view revealer, based on the ID code of the object that is detected. Verifying that the view revealer is associated with a specific user or users enables the application to ensure that the private data are being displayed in an obfuscated form at the appropriate location to ensure that only a privileged user can view the private data through the view revealer.

In a step 190, the privileged user views the private data through the view revealer. At this point, the privileged user may carry out some further action or function, such as asking a question requiring knowledge of the private data. Optionally, in a step 192, the IPM removes the obfuscation, enabling all users to visually perceive the private data (which are no longer private). This step might be done, for example, after a response to a question has been given by a non-privileged user, enabling the correct response to be shown by displaying the private data for all users to see.

### Process for Removing Private Data

Allowing only privileged users to view private data implies keeping private data from being viewed by non-privileged users. Removing private data during dynamic interaction with the interactive display table ensures that private data are not inadvertently exposed to any non-privileged user.

FIGURE 9 illustrates, in an exemplary manner, a flow chart 200 that includes the steps for handling removal of private data from the display surface. As indicated in a step 202, a user removes a view restrictor from the interactive table surface. Clearly, removing the view restrictor would enable the private data to be readily seen by all users around the display surface. To prevent that result, a step 204 indicates that the IPM detects the removal of the view restrictor during a next display processing frame. When the support of the view restrictor is removed from the interactive display table, the ID code of the view restrictor is no longer detected, enabling the IPM to detect that action. For example, the simple removal of the view restrictor might be detected based only upon the change in the reflected IR from the underside of the support for the view restrictor.

In a step 206, the IPM responds to the removal of the view restrictor by interrupting the display of the private data on the display surface, thus preventing non-privileged users from viewing the private data.

Although the present invention has been described in connection with the preferred form of practicing it and modifications thereto, those of ordinary skill in the art will understand that many other modifications can be made to the present invention within the scope of the claims that follow. Accordingly, it is not intended that the scope of the invention in any way be limited by the above description, but instead be determined entirely by reference to the claims that follow.

## Claims

1. A method for restricting a view of private information displayed on a display surface to a privileged viewer, comprising the steps of:
(a) enabling a view restrictor to be positioned at a first location on the display surface; and
(b) displaying the private information at a second location on the display surface so that the view restrictor substantially blocks any non-privileged viewer from viewing the private information but enables the privileged viewer to view the private information.

2. The method of Claim 1, wherein the first location and the second location are predefined.

3. The method of Claim 1, further comprising the steps of:
(a) sensing the location of the view restrictor to determine the first location; and
(b) determining the second location as a function of the first location that was determined.

4. A method for restricting a view of private information displayed on a display surface to a privileged viewer, wherein at least a portion of the display surface can be viewed by a non-privileged viewer, comprising the steps of:
(a) detecting a view restrictor placed on the display surface, the view restrictor restricting a view of a private portion of the display surface to a privileged viewer;
(b) associating the view restrictor with the private information;
(c) determining the private portion on the display surface at which to display the private information; and
(d) displaying the private information at the private portion.

5. The method of Claim 4, wherein the step of detecting the view restrictor comprises the step of detecting a physical property associated with the view restrictor from one of two different dispositions, including:
(a) from a side of the interactive display surface that is opposite an object side of the display surface, the object side being where the view restrictor is placed; and
(b) from within the interactive display surface.

6. The method of Claim 4, further comprising the steps of:
(a) determining at least one of a location and an orientation of the view restrictor on the display surface; and
(b) determining the private portion relative to at least one of the location and the orientation of the view restrictor on the display surface.

7. The method of Claim 6, wherein the step of determining the orientation of the view restrictor comprises the step of determining an orientation characteristic including at least one of:
(a) a shape of the view restrictor;
(b) an orientation of an identifier on the view restrictor;
(c) a variation in a color of the object;
(d) a variation in light intensity reflected from the view restrictor;
(e) a magnetic polarization of the view restrictor;
(f) a pressure vibration produced by the view restrictor on the display surface; and
(g) an electrical characteristic of the view restrictor.

8. The method of Claim 4, further comprising the steps of:
(a) identifying the privileged viewer with whom the view restrictor is associated and who is to view the private information;
(b) determining a location of the privileged viewer relative to the view restrictor; and
(c) determining whether the view restrictor is oriented such that the private portion is viewable from the privileged viewer location.

9. The method of Claim 8, wherein the step of determining the location of the privileged viewer comprises at least one of the steps of:
(a) determining a location of a privileged viewer token on the display surface;
(b) determining the location of the predefined privileged viewer as a function of a state of an application displaying the private information on the display surface
(c) determining the location of the predefined privileged viewer base upon a user input on the display surface.

10. The method of Claim 4, further comprising the steps of:
(a) determining a location of the non-privileged viewer relative to the view restrictor; and
(b) adjusting a disposition of the private portion of the display surface such that the view restrictor prevents the private information being visible from the location of the non-privileged viewer.

11. The method of Claim 4, further comprising the steps of:
(a) using the private information that is displayed to prompt the privileged user to interactively provide an input; and
(b) detecting an input by the privileged user as a result of the privileged viewer interacting with the display surface.

12. The method of Claim 4, further comprising the steps of:
(a) detecting removal of the view restrictor from the display surface; and
(b) interrupting display of the private information on the display surface in response to the view restrictor being removed from the display surface.

13. A memory medium on which are stored machine instructions for carrying out the steps of Claim 4.

14. A system for restricting a view of private information displayed to a privileged viewer, to prevent the private information being viewed by a non-privileged viewer, comprising:
(a) a display surface on which the private information is displayed, the display surface having an interactive side from which the private information is viewed on which objects can be placed, at least a portion of the display surface being visible to a non-privileged viewer;
(b) a view restrictor that is sized and shaped to be placed on the display surface to restrict a view of private information being displayed on the display surface, so that the private information is not visually perceivable by a non-privileged viewer;
(c) a light source disposed on an opposite side of the display surface from the interactive side, the light source emitting an infrared light that is transmitted through the display surface to the interactive side of the display surface;
(d) a light sensor disposed on the opposite side of the display surface, the light sensor sensing infrared light reflected back from an object through the display surface;
(e) a processor in communication with the light sensor; and
(f) a memory in communication with the processor, the memory storing data and machine instructions that cause the processor to carry out a plurality of functions, including:
(i) detecting the view restrictor when it is placed on the display surface to restrict a view of a private portion of the display surface, to prevent the private information from being visible to a non-privileged viewer;
(ii) associating the view restrictor with the private information;
(iii) determining the private portion on the display surface at which to display the private information; and
(iv) displaying the private information at the private portion.

15. The system of Claim 14, wherein the light sensor detects the view restrictor from the opposite side of the display surface by responding to infrared light reflected back from the view restrictor, producing a corresponding signal that is supplied to the processor.

16. The system of Claim 15, wherein the machine instructions further cause the processor to:
(a) process the signal from the light sensor to determine at least one of a location and an orientation of the view restrictor on the display surface; and
(b) determine the private portion relative to at least one of the location and the orientation of the view restrictor on the display surface.

17. The system of Claim 16, wherein the machine instructions further cause the processor to process the signal from the light sensor to determine an orientation characteristic, including at least one of:
(a) a shape of the view restrictor;
(b) an orientation of an identifier on the view restrictor;
(c) a variation in a color of the view restrictor; and
(d) a variation in light intensity of the infrared light reflected from the view restrictor.

18. The system of Claim 14, wherein the machine instructions further cause the processor to:
(a) identify the privileged viewer with whom the view restrictor is associated and who is to view the private information;
(b) determine a location of the privileged viewer relative to the view restrictor; and
(c) determine whether the view restrictor is oriented such that the private portion is viewable from the location of the privileged viewer.

19. The system of Claim 18, further comprising a privileged viewer token, wherein to determine the location of the privileged viewer, the machine instructions further cause the processor to:
(a) use the light detector to sense light reflected from the privileged viewer token when placed on the display surface, producing a signal that is processed by the processor to determine a location of the privileged viewer token on the display surface; and
(b) determine the location of the predefined privileged viewer as a function of a state of an application displaying the private information on the display surface.

20. The system of Claim 14, wherein the machine instructions further cause the processor to:
(a) determine a location of the non-privileged viewer relative to the view restrictor; and
(b) adjust a disposition of the private portion of the display surface such that the view restrictor prevents the private information being visible from the location of the non-privileged viewer.

21. The system of Claim 14, wherein the machine instructions further cause the processor to:
(a) use the private information that is displayed to prompt for an interactive input by a privileged user; and
(b) detect an input as a result of the privileged viewer interacting with the privileged information.

22. The system of Claim 14, wherein the machine instructions further cause the processor to:
(a) use the light sensor to detect removal of the view restrictor from the display surface; and
(b) interrupt display of the private information on the display surface in response to the view restrictor being removed from the display surface.

23. A method for revealing private information on a display surface, wherein at least a portion of the display surface can be viewed by a non-privileged viewer, comprising the steps of:
(a) obfuscating private information displayed on the display surface; and
(b) enabling the private information to be viewed through a view revealer that is in a line of sight between the private information and a privileged viewer.

24. The method of Claim 23, wherein the step of obfuscating the private information comprises the step of applying a color marking to the private information to prevent the private information from being visually perceived apart from the color marking, unless the private information is viewed through the view revealer,

25. The method of Claim 24, wherein the view revealer comprises a light filter that filters out the color marking to enable the private information to be visually perceived apart from the color marking.

26. The method of Claim 23, further comprising the step of selectively displaying the private information without obfuscating it, to enable the private information to be disclosed to all who see it.

27. A view restrictor for restricting view of private information on a display surface, wherein at least a portion of the display surface can be viewed by a non-privileged viewer, comprising:
(a) a view restricting panel that is shaped and sized to restrict a view of a private portion of the display surface from at least one direction;
(b) a support coupled to the view restricting panel, for supporting the view restricting panel upright above the display surface; and
(c) an identifier associated with the view restrictor, said identifier identifying the view restrictor to a display system, so that private information related to the view restrictor is displayed at the private portion of the display surface and is viewable from a desired position, but not from at least said one direction.

28. The view restrictor of Claim 27, wherein the identifier comprises at least one of a predefined shape, a detectable marker code, a color, an electrical characteristic, a visual pattern, and a signal.

29. A view revealer for enabling private information displayed on a display surface to be visually perceived only by a privileged viewer viewing the display surface, wherein at least a portion of the display surface on which the private information is displayed, but visually obscured, so that when viewed by a non-privileged viewer, the private information is not visually perceived by the non-privileged viewer, comprising:
(a) a view revealing component that enables the private information to be perceived by a privileged viewer when the view revealing component is placed in a line of sight between the privileged viewer and the display surface; and
(b) a support that is coupled to the view revealing component, for supporting the view revealing component between the private information and a line of sight of the privileged viewer.

30. The view revealer of Claim 29, further comprising an identifier associated with the view revealer and with the private informarion, said identifier identifying the view revealer to a display system, so that the private information associated with the identifier and with the view revealer is displayed in a visually obscured form on the display surface and is visually perceivable by a privileged viewer when seen through the view revealing component

31. The view revealer of Claim 29, wherein the view revealing component comprises a color filter for filtering out a color marker applied to the private information when the private information is displayed, to visually obscure the private information unless the private information is viewed through the color filter.
